# EUROPEAN PATENT SPECIFICATION

(11) **EP 3 604 070 B1**
(45) Date of publication and mention of the grant of the patent: **09.12.2026**
(21) Application number: 19188599.5
(22) Date of filing: 26.07.2019
(51) Int. Cl.: B60W 50/00, B60W 50/10

(54) **METHOD FOR DRIVING VEHICLE AND CORRESPONDING CONTROLLER**
VERFAHREN ZUM ANTRIEB EINES FAHRZEUGS UND ZUGEHÖRIGES STEUERGERÄT
PROCÉDÉ DE CONDUITE DE VÉHICULE ET ORGANE DE COMMANDE CORRESPONDANT

(30) Priority: 02.08.2018 CN 201810869707
(43) Date of publication of application: 05.02.2020
(73) Proprietor: Robert Bosch GmbH, 70442 Stuttgart (DE)
(72) Inventor: Boronka, Alexander, Shanghai, 200335 (CN)

(56) References cited:
- DE-A1- 102014 013 960
- DE-A1- 102016 223 794
- US-A1- 2016 264 131

## Description

### Technical Field

The present invention relates to a method for driving a vehicle and a corresponding controller.

### Background Art

More and more modern motor vehicles are equipped with a microphone that can be used for voice recognition to command and control the vehicle and can also be used for mobile communication purposes. For example, for some vehicles, especially for an autonomous vehicle, it is possible to select different driving modes based on a voice command captured by a microphone, and the driving modes may include different driving characteristics at different distances when following a vehicle ahead, for example. In addition, it has been proposed that an airbag on a front side of a vehicle could be triggered, based on screams from a passenger or a driver detected by a microphone inside the vehicle, to expand to reduce the severity of the impact.

As a passenger in a vehicle (for example, in a taxi), it is the general experience that sometimes we feel safe and sometimes we feel unsafe. One reason for this may be the unique behavior of the driver keeping a distance from a vehicle ahead during normal driving and during braking (such as a braking point, deceleration, etc.).

This is true not only for a passenger in a manned vehicle, but also for one in an autonomous vehicle. Moreover, this is also true for a driver of a manned vehicle when the manned vehicle is driven in a certain assisted driving mode.

However, the inner feeling of a passenger or a driver cannot be acquired only by a microphone. For example, the heart rate of the passenger or the driver tends to increase under stress but is invisible from the outside. As a result, some passengers and/or drivers may feel uncomfortable in certain driving modes, even if they do not express it voluntarily.

Therefore, it is necessary to improve the existing method to capture the inner discomfort of a passenger or a driver and then adjust the driving characteristics of the vehicle based on making the inner feeling more comfortably and more safely, so that the passenger or the driver feels comfortable.

DE 10 2016 223794 A1 provides a method for assessing acceptance of at least one driver assistance system of an autonomously driving motor vehicle, comprising the steps of: detecting values of at least one person state parameter; recording values of at least one operating parameter of the at least one driver assistance system in a memory device; checking whether at least one value of the at least one person state parameter exceeds a predefinable threshold; affirming: reading and transmitting at least the value of the at least one operating parameter is correlated in time with the at least one value of the at least one person state parameter that has exceeded the predefinable threshold value and the at least one value of the at least one person state parameter that has exceeded the predefinable threshold value to a central data processing. The invention also relates to a corresponding system for assessing acceptance of at least one driver assistance system and to a corresponding motor vehicle.

DE 10 2014 013960 A1 provides a method for operating at least one driver assistance device of a motor vehicle, comprising the steps of: performing at least one at least partially autonomous driving maneuver of the motor vehicle by means of the driver assistance device according to at least one characteristic curve determining the execution of the driving maneuver; Detecting an evaluation of a driver of the motor vehicle regarding the performed driving maneuver; Determine, based on the driver's assessment, whether he wishes to change the driving maneuver; if it is determined on the basis of the detected assessment of the driver that he wishes a modified execution of the driving maneuver: changing the characteristic corresponding to the detected assessment of the driver. Furthermore, the invention relates to a system with at least one driver assistance device.

US 2016/264131 A1 provides a vehicle which includes an occupant monitoring system and a processing circuit coupled to the occupant monitoring system. The occupant monitoring system is configured to acquire occupant data regarding an occupant of the vehicle. The processing circuit is configured to receive the occupant data; determine a vehicle operation command based on the occupant data, the vehicle operation command configured to affect operation of the vehicle while the vehicle is in a robotic driving mode; and provide the vehicle operation command to a vehicle system.

### Summary of the Invention

In view of the problems existing in the prior art, an object of the present invention is to provide a method for driving a vehicle, a corresponding controller and a corresponding vehicle.

In order to achieve this object, according to the present invention, provided is a method for driving a vehicle as defined in independent claim 1, the method comprising at least the following steps: driving the vehicle in a selected unmanned driving mode; monitoring the reaction of a vehicle occupant to the current unmanned driving characteristics of the vehicle to obtain at least one kind of information representing the inner discomfort of the vehicle occupant; and adaptively adjusting the current unmanned driving characteristics of the vehicle at least based on the obtained information so as to at least temporarily relieve the inner discomfort of the vehicle occupant during the subsequent unmanned driving, wherein the monitoring for the reaction of the vehicle occupant is limited only to when and after a sensitive driving operation of the vehicle is detected,
wherein the sensitive driving operation is:
   - a driving operation in which the distance from the vehicle ahead is less than a predetermined distance value; and/or
   - a driving operation in which the absolute value of deceleration during braking is greater than a predetermined deceleration value; or
   - a driving operation in which an acceleration value during acceleration is greater than a predetermined acceleration value; and/or
   - a driving operation in which a continuous steering angle of the vehicle is greater than a predetermined steering angle value,
wherein the current driving characteristics of the vehicle are adjusted by switching from a first driving mode to a second driving mode that is gentler than the first driving mode, and
wherein the monitoring of the reaction of the vehicle occupant starts at the beginning of the sensitive driving operation and continues until the vehicle occupant feels comfortable.

According to the present invention, provided is a controller for a vehicle as defined in independent claim 7, the controller comprising a memory, a processor, and program instructions stored in the memory and being executable by the processor, wherein the program instructions are executed by the processor to implement the above method.

According to the present invention, the driving characteristics of a vehicle can be automatically adjusted based on the inner feeling of a vehicle occupant, so that the vehicle can be driven in a comfortable mode.

### Brief Description of the Drawings

The present invention and the advantages thereof will be further understood from reading the following detailed description of some preferred exemplary embodiments with reference to the accompanying drawings.

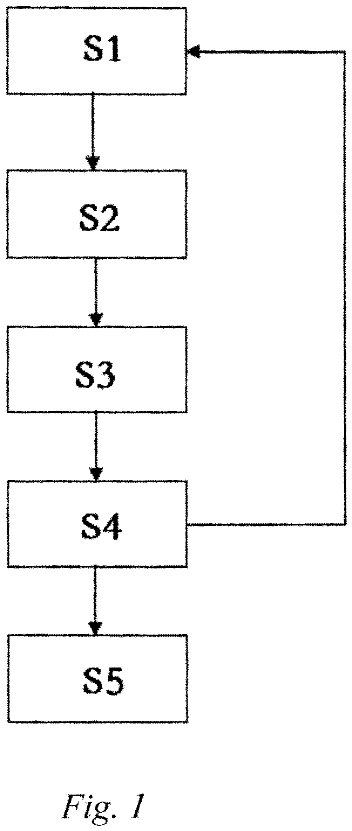

Fig. 1 schematically shows a flowchart illustrating a basic principle of a method for controlling an autonomous vehicle according to an exemplary embodiment of the present invention.

### Detailed Description of Embodiments

Some exemplary embodiments of the present invention will be described in more detail below with reference to the accompanying drawings, in order to better understand the basic idea of the present invention.

Fig. 1 schematically shows a flowchart illustrating a basic principle of a method for controlling an autonomous vehicle according to an exemplary embodiment of the present invention. However, it should be noted that the method of the present invention not only adapts to the autonomous vehicle, but also adapts to a manned vehicle having at least one assisted driving mode, such as an adaptive cruise control (ACC) mode.

For an autonomous vehicle, a driver is usually not required, but the vehicle often carries at least one passenger. For a manned vehicle, a driver is required, and the vehicle may also carry at least one passenger. In the context of the present disclosure, in order to facilitate the description, drivers and/or passengers are commonly referred to as vehicle occupants, and their actual number is not limited herein.

As shown in Fig. 1, in S1, an autonomous vehicle is driving in a selected unmanned driving mode, thus the vehicle has corresponding driving characteristics. If it is detected in S2 that a vehicle occupant feels uncomfortable, the current driving mode is changed in S3 by, for example, smoothing the algorithm for a driving scheme of the vehicle to adjust the current driving characteristics of the vehicle. In S4, the vehicle occupant feels comfortable again in the changed driving mode, and then in S5 the changed comfortable driving mode is maintained or preferably gradually returns to the previously selected driving mode, which makes the vehicle occupant feel concerned, so he/she won't feel uncomfortable again even in the previously selected driving mode.

For a person skilled in the art, the technical meanings of terms "driving characteristic" and "driving mode" are easy to understand. The terms "driving characteristic" and "driving mode" are overlapped in meaning and also have differences. The term "driving mode" refers more to a travelling mode of a vehicle, while the term "driving characteristic" is represented more based on driving parameters. Therefore, changes in the driving parameters (such as changes in acceleration during braking and acceleration) mean changes in the driving characteristics, and changes in the driving mode mean changes in the driving characteristics. However, the two can even be used interchangeably in some cases.

The detection for inner discomfort of a vehicle occupant will be described in detail below according to some exemplary embodiments of the present invention.

As is well-known, when a person is aware of an approaching danger or the like, she/he usually feels nervous so that at least one of her/his physiological parameters has changed.

According to one exemplary embodiment of the present invention, the heart rate of the vehicle occupant can be monitored as a physiological parameter to detect her/his reaction, or the inner feeling. It could be understood that the heart rate of a person usually increases with the increase of the level of tension.

The inner feeling is a reaction, which may be a physical change, of a person to a situation.

Recently, more and more people use various wearable devices, such as a wristband or a smartwatch, to monitor certain physiological parameters, such as the heart rate. Therefore, according to one exemplary embodiment of the present invention, a vehicle can acquire at least one physiological parameter of the vehicle occupant, such as the heart rate, via a wearable device worn by a vehicle occupant.

According to one exemplary embodiment of the present invention, a wearable device can only be used with the permission of the vehicle occupant. For example, this is an inherent characteristic for some wireless transmission protocols, such as Bluetooth, which normally establishes connecting links only after pairing.

More generally, according to one exemplary embodiment of the present invention, the physiological parameters can only be used by a vehicle with the permission of the vehicle occupant.

Of course, it would have been appreciated by those skilled in the art that other wireless solutions are also possible. It is even possible to use wired connection to transmit a physiological parameter monitored by a wearable device to a controller, such as an electronic control unit (ECU), of a vehicle.

According to one exemplary embodiment of the present invention, the physiological parameter may also be the respiratory rate of a vehicle occupant.

According to the invention, the inner feeling of the vehicle occupant is monitored or used by the controller of the vehicle only during a predetermined driving operation. More specifically, only when a sensitive driving operation is detected by, for example, a vehicle-based control logic, the inner feeling of the vehicle occupant is monitored based on the heart rate, for example.

According to the present invention, the monitoring for the inner feeling of a vehicle occupant is limited only to the time when and after the sensitive driving operation is detected. That is to say, the monitoring for the inner feeling of the vehicle occupant starts at the beginning of the sensitive driving operation and lasts for a period of time, until the vehicle occupant feels comfortable.

According to the present invention, the monitoring of the inner feeling of the vehicle occupant can also be continuous, so that at least data measured just before the start of the sensitive driving operation can be considered.

According to one exemplary embodiment of the present invention, the sensitive driving operation is a driving operation in which the distance from a vehicle ahead is less than a predetermined distance value, such as the lower limit of a permissible distance range of the vehicle, and/or a driving operation in which the absolute value of deceleration during braking is greater than a predetermined deceleration value, such as the upper limit of the absolute value of a permissible deceleration range of the vehicle, or a driving operation in which an acceleration value during acceleration is greater than a predetermined acceleration value, and/or a driving operation in which a continuous steering angle of the vehicle is greater than a predetermined steering angle value.

What these sensitive driving operations have in common is that they usually should not occur in smooth and regular traffic, but may occur due to some unexpected disturbances, such as a travelling lane being suddenly interfered by an object, sudden braking of a vehicle ahead, and so on.

As mentioned above, in general, especially when the vehicle is driven in a sensitive driving mode, the inner feeling of the vehicle occupant can be represented by detectable information such as physiological parameters, and the driving characteristics, such as driving modes, of the vehicle can be adjusted accordingly based on this information. In other words, especially in the sensitive driving operation, it is possible to learn the reaction of the vehicle occupant and accordingly adjust the driving characteristics of the vehicle to make the vehicle occupant feel comfortable again or reduce the discomfort.

It is the general experience that some people in the vehicle may be very relaxed so that they are not easily affected, but some sensitive people in the vehicle may be seriously affected in the same situation. This may not only occur in a life-threatening situation, but also occur when the vehicle is still under control. One of the main causes of discomfort is simply in that the vehicle occupant cannot participate in adjusting the current driving characteristics causing discomfort, and usually cannot do anything by himself/herself.

By learning the reactions of the vehicle occupant, the vehicle can be driven in such a way that makes the vehicle occupant feel comfortable.

For example, if the vehicle occupant feels unsafe in some way, the inner feeling can be at least relieved by the subsequent over-cautious driving style. Thus, if the vehicle recognizes the discomfort of the vehicle occupant based on such as the heart rate, the vehicle can be automatically adjusted to have gentler driving characteristics (for example, driving in a safer driving mode). For example, acceleration and braking processes can be smoother. By doing so, the discomfort of those skilled in the art can be gradually relieved and eventually disappear, which will make the vehicle occupant feel concerned about.

It could be understood that the over-cautious driving style may increase the travelling time and may not take advantage of any possibilities to speed up the travelling process, but it can make the vehicle occupant feel comfortable during the driving of the vehicle.

According to one exemplary embodiment of the present invention, after the inner feeling of the vehicle occupant returns to a normal state (for example, based on the heart rate), the vehicle may switch back to the previous driving mode, or may not switch back to the previous driving mode.

According to one alternative exemplary embodiment of the present invention, the inner feeling, especially the discomfort, of the vehicle occupant may also be detected based on other self-generated signals, such as by recognizing self-generated voice. In general, people yell when they suddenly feel threatened or uncomfortable. The voice may be louder or may not be so loud, such as "Puuuh", "Ahhh" or "Sssssss". The voice may also be a sentence, such as "that was close".

The detection may be performed based on the existing voice recognition system in the vehicle.

According to one exemplary embodiment of the present invention, artificial intelligence and deep learning can be used to correlate the recognized voice with the heart rate and find dependencies between them. In this case, the driving modes can be adjusted more precisely to adapt to a future vehicle occupant.

According to one exemplary embodiment of the present invention, the driving characteristics of the vehicle may be adaptively optimized, so that the optimized driving characteristics are more suitable for the driver or the passenger.

If there are more than one person in the vehicle, the driving characteristics of the vehicle can be adjusted based on the inner feeling of one of them, preferably the inner feeling of a person in the front seat. Of course, this may also be carried out based on the inner feeling of the most uncomfortable person in the multiple persons in the vehicle, such as based on the person having the highest heart rate, which will make everyone in the vehicle feel comfortable.

It could be understood from the above that, according to the present invention, the driving characteristics of the vehicle can be automatically adjusted based on self-generated and/or invisible signals.

Although some embodiments have been described, they are presented only as examples and are not intended to limit the scope of the present invention. The present invention covers all modifications, replacements and changes falling within the scope of the present invention, as defined by the appended independent claims.

## Claims

1. A method for driving a vehicle, the method comprising at least the following steps:
driving (S1) the vehicle in a selected unmanned driving mode;
monitoring (S2) a reaction of a vehicle occupant to current unmanned driving characteristics of the vehicle to obtain at least one kind of information representing an inner discomfort of the vehicle occupant; and
adaptively adjusting (S3) the current unmanned driving characteristics of the vehicle at least based on the obtained information so as to at least temporarily relieve the inner discomfort of the vehicle occupant during a subsequent unmanned driving,
wherein the monitoring for the reaction of the vehicle occupant is limited only to when and after a sensitive driving operation of the vehicle is detected,
wherein the sensitive driving operation is:
• a driving operation in which a distance from a vehicle ahead is less than a predetermined distance value; and/or
• a driving operation in which an absolute value of deceleration during braking is greater than a predetermined deceleration value; or
• a driving operation in which an acceleration value during acceleration is greater than a predetermined acceleration value; and/or
• a driving operation in which a continuous steering angle of the vehicle is greater than a predetermined steering angle value,
wherein the current driving characteristics of the vehicle are adjusted by switching from a first driving mode to a second driving mode that is gentler than the first driving mode, and
wherein the monitoring of the reaction of the vehicle occupant starts at the beginning of the sensitive driving operation and continues until the vehicle occupant feels comfortable.

2. The method according to claim 1, wherein
the information is a self-generated and/or invisible signal.

3. The method according to claim 1 or 2, wherein
the signal is selected from any one of a heart rate, a respiratory rate and/or a self-generated voice comment of the vehicle occupant.

4. The method according to any one of the preceding claims, wherein
the information is provided by a wearable device worn by the vehicle occupant; and/or
the information is provided by a voice recognition system in the vehicle.

5. The method according to any one of the preceding claims, wherein
the information can only be obtained with the permission of the vehicle occupant; and/or
the information is obtained by wireless transmission.

6. The method according to any one of the preceding claims, wherein
artificial intelligence and deep learning are used to optimize the algorithm for a driving scheme of a vehicle based on the information.

7. A controller for a vehicle, the controller comprising a memory, a processor, and program instructions stored in the memory and being executable by the processor, wherein the program instructions are executed by the processor to implement the method according to any one of claims 1-6.

8. A vehicle comprising the controller according to claim 7.

## Patentansprüche

1. Verfahren zum Fahren eines Fahrzeugs, wobei das Verfahren zumindest die folgenden Schritte umfasst:
Fahren (S1) des Fahrzeugs in einem ausgewählten autonomen Fahrmodus;
Überwachen (S2) einer Reaktion eines Fahrzeuginsassen auf aktuelle autonome Fahreigenschaften des Fahrzeugs, um zumindest eine Art von Informationen zu erhalten, die ein inneres Unbehagen des Fahrzeuginsassen widerspiegelt; und
adaptives Anpassen (S3) der aktuellen autonomen Fahreigenschaften des Fahrzeugs zumindest auf Grundlage der erhaltenen Informationen, um das innere Unbehagen des Fahrzeuginsassen während einer nachfolgenden autonomen Fahrt zumindest vorübergehend zu mindern,
wobei das Überwachen der Reaktion des Fahrzeuginsassen ausschließlich auf eine Zeit ab einem Zeitpunkt einer Erkennung eines sensiblen Fahrvorgangs des Fahrzeugs beschränkt ist,
wobei es sich bei dem sensiblen Fahrvorgang um Folgendes handelt:
• einen Fahrvorgang, bei dem ein Abstand zu einem vorausfahrenden Fahrzeug kleiner als ein vorbestimmter Abstandswert ist; und/oder
• einen Fahrvorgang, bei dem ein Absolutwert einer Verlangsamung während eines Bremsens größer als ein vorbestimmter Verlangsamungswert ist; oder
• einen Fahrvorgang, bei dem ein Beschleunigungswert während einer Beschleunigung größer als ein vorbestimmter Beschleunigungswert ist; und/oder
• einen Fahrvorgang, bei dem ein kontinuierlicher Lenkwinkel des Fahrzeugs größer als ein vorbestimmter Lenkwinkelwert ist,
wobei die aktuellen Fahreigenschaften des Fahrzeugs durch Umschalten von einem ersten Fahrmodus in einen zweiten Fahrmodus angepasst werden, der sanfter ist als der erste Fahrmodus, und
wobei die Überwachung der Reaktion des Fahrzeuginsassen zu Beginn des sensiblen Fahrvorgangs beginnt und so lange fortgesetzt wird, bis sich der Fahrzeuginsasse wohlfühlt.

2. Verfahren nach Anspruch 1, wobei
es sich bei den Informationen um ein selbsterzeugtes und/oder unsichtbares Signal handelt.

3. Verfahren nach Anspruch 1 oder 2, wobei
das Signal ausgewählt ist aus einer Herzfrequenz, einer Atemfrequenz und/oder einem selbsterzeugten Sprachkommentar des Fahrzeuginsassen.

4. Verfahren nach einem der vorhergehenden Ansprüche, wobei
die Informationen von einer tragbaren Vorrichtung bereitgestellt werden, die vom Fahrzeuginsassen getragen wird; und/oder
die Informationen von einem Spracherkennungssystem im Fahrzeug bereitgestellt werden.

5. Verfahren nach einem der vorhergehenden Ansprüche, wobei
die Informationen nur mit Zustimmung des Fahrzeuginsassen erhalten werden können; und/oder
die Informationen durch drahtlose Übertragung erhalten werden.

6. Verfahren nach einem der vorhergehenden Ansprüche, wobei
künstliche Intelligenz und Deep Learning eingesetzt werden, um den Algorithmus für ein Fahrschema eines Fahrzeugs auf Grundlage der Informationen zu optimieren.

7. Steuerung für ein Fahrzeug, wobei die Steuerung einen Speicher, einen Prozessor sowie im Speicher gespeicherte und durch den Prozessor ausführbare Programmanweisungen umfasst, wobei die Programmanweisungen vom Prozessor ausgeführt werden, um das Verfahren nach einem der Ansprüche 1 bis 6 zu implementieren.

8. Fahrzeug, das die Steuerung nach Anspruch 7 umfasst.

## Revendications

1. Procédé pour conduire un véhicule, le procédé comprenant au moins les étapes suivantes :
la conduite (S1) du véhicule dans un mode sélectionné de conduite autonome ;
la surveillance (S2) d'une réaction d'un occupant de véhicule à des caractéristiques actuelles de conduite autonome du véhicule pour obtenir au moins un type d'informations représentant un inconfort interne de l'occupant de véhicule ; et
l'ajustement adaptatif (S3) des caractéristiques actuelles de conduite autonome du véhicule au moins sur la base des informations obtenues afin de réduire au moins temporairement l'inconfort interne de l'occupant de véhicule durant une conduite autonome subséquente,
dans lequel la surveillance en ce qui concerne la réaction de l'occupant de véhicule est limitée seulement à l'instant auquel une opération de conduite délicate du véhicule est détectée et à la période après ledit instant,
dans lequel l'opération de conduite délicate est :
• une opération de conduite dans laquelle une distance par rapport à un véhicule se trouvant devant est inférieure à une valeur de distance prédéterminée ; et/ou
• une opération de conduite dans laquelle une valeur absolue de ralentissement durant un freinage est supérieure à une valeur de ralentissement prédéterminée ; ou
• une opération de conduite dans laquelle une valeur d'accélération durant une accélération est supérieure à une valeur d'accélération prédéterminée ; et/ou
• une opération de conduite dans laquelle un angle de braquage continu du véhicule est supérieur à une valeur prédéterminée d'angle de braquage,
dans lequel les caractéristiques actuelles de conduite du véhicule sont ajustées en passant d'un premier mode de conduite à un second mode de conduite qui est plus subtil que le premier mode de conduite, et
dans lequel la surveillance de la réaction de l'occupant de véhicule commence au début de l'opération de conduite délicate et continue jusqu'à ce que l'occupant de véhicule soit confortable.

2. Procédé selon la revendication 1, dans lequel
les informations sont un signal auto-généré et/ou invisible.

3. Procédé selon la revendication 1 ou 2, dans lequel
le signal est sélectionné parmi un quelconque d'une fréquence cardiaque, d'une fréquence respiratoire, et/ou d'un commentaire vocal auto-généré de l'occupant de véhicule.

4. Procédé selon l'une quelconque des revendications précédentes, dans lequel
les informations sont fournies par un dispositif portable porté par l'occupant de véhicule ; et/ou
les informations sont fournies par un système de reconnaissance vocale dans le véhicule.

5. Procédé selon l'une quelconque des revendications précédentes, dans lequel
les informations peuvent seulement être obtenues avec la permission de l'occupant de véhicule ; et/ou
les informations sont obtenues par transmission sans fil.

6. Procédé selon l'une quelconque des revendications précédentes, dans lequel
une intelligence artificielle et un apprentissage profond sont utilisés pour optimiser l'algorithme pour un schéma de conduite d'un véhicule basé sur les informations.

7. Unité de commande pour un véhicule, l'unité de commande comprenant une mémoire, un processeur, et des instructions de programme stockées dans la mémoire et exécutables par le processeur, dans lequel les instructions de programme sont exécutées par le processeur pour mettre en œuvre le procédé selon l'une quelconque des revendications 1 à 6.

8. Véhicule, comprenant l'unité de commande selon la revendication 7.
